# EUROPEAN PATENT APPLICATION

(11) **EP 3 869 607 A1**
(43) Date of publication of application: **25.08.2021**
(21) Application number: 19873551.6
(22) Date of filing: 13.09.2019
(51) Int. Cl.: H01M 10/44, H01M 10/48, H02J 7/00, H02J 7/10

(54) **POWER STORAGE BATTERY CONTROL DEVICE AND POWER STORAGE BATTERY CONTROL METHOD**

(30) Priority: 18.10.2018 JP 2018196369
(71) Applicant: NGK Insulators, Ltd., Nagoya-shi, Aichi 467-8530 (JP)
(72) Inventor: HATTA Tetsuya, Nagoya-shi, Aichi 467-8530 (JP); ABE Hiroyuki, Nagoya-shi, Aichi 467-8530 (JP)
(74) Representative: Mewburn Ellis LLP
(86) International application number: PCT/JP2019/036143
(87) International publication number: WO 2020/080010

(57) **Abstract**

Deterioration of a storage battery is reduced, and the storage battery is caused to fully exhibit its performance in a time of emergency. A power value of charged/discharged power and charge/discharge time of the storage battery are controlled so as to be able to keep to a limit including at least one of an upper limit of temperature and a lower limit of a power storage amount of the storage battery. In normal times, the limit is set to a first limit having first tolerance. In a time of emergency, the limit is set to a second limit having second tolerance being smaller than the first tolerance or not having tolerance.

## Description

### Technical Field

The present invention relates to a control apparatus of a storage battery and a control method for the storage battery.

### Background Art

An independent system is constructed in an isolated island, a remote location, or the like, and is not interconnected to other systems. The independent system is also referred to as an independent system, an independent power system, or the like.

The independent system in many cases includes a renewable energy power generator, a storage battery, a control device, and a load. The renewable energy power generator, the storage battery, and the control equipment constitute a power supply system that supplies power. The control equipment controls the renewable energy power generator and the storage battery. The renewable energy power generator generates power. The storage battery is charged with power that is generated by the renewable energy power generator. The control equipment and the load are supplied with power generated by the renewable energy power generator and power discharged from the storage battery.

The power value of charged/discharged power, charge/discharge time, the heat dissipation amount, and the like of the storage battery are controlled so as to be able to keep to the limit including the upper limit of temperature of the storage battery, the lower limit of the power storage amount, and the like. The limit is set to have tolerance so as to reduce deterioration, failure, or the like of the storage battery. For example, in the case that the storage battery is a sodium-sulfur battery, the upper limit of the temperature of the storage battery is set to 340 °C, which has tolerance with respect to 370 °C at which the sodium-sulfur battery operates.

In the technology described in Patent Document 1, the highest reachable temperature of a module being a sodium-sulfur battery module is set to 340 °C to 370 °C when the module is driven (paragraphs 0031 and 0040). With this configuration, the module is driven with charge/discharge efficiency of the battery being constantly high (paragraph 0031). Patent Document 1 makes a reference to the fact that, when module temperature is increased to be higher than 370 °C, the progress of deterioration of members constituting an electric cell is expedited (paragraph 0031). Further, Patent Document 1 makes a reference to the fact that, when the module is driven at temperature lower than 340 °C, charge/discharge efficiency is not increased and performance of the module itself or performance of the electric cell constituting the module cannot be fully exhibited (paragraph 0031). In the technology described in Patent Document 1, the heat dissipation amount of the module is changed by adjusting the degree of vacuum of a hollow part of an upper lid of a thermally insulated container (paragraphs 0033 to 0035).

In the technology described in Patent Document 2, the temperature in a casing in which batteries are embedded is maintained within a certain allowable range (paragraph 0028). In the technology described in Patent Document 2, a heat dissipation device including a fan is controlled so that the heat dissipation amount is increased before the time when the temperature of the storage battery is increased (paragraphs 0020 and 0036).

Patent Document 3 makes a reference to the fact that absolute capacity of the sodium-sulfur battery is constant, whereas residual capacity of the sodium-sulfur battery is increased over time (paragraph 0032). Further, Patent Document 3 makes a reference to the fact that, in designing of the sodium-sulfur battery, in consideration of tolerance for available capacity, an increase amount of the residual capacity is covered by the tolerance so as to secure the available capacity until the last years (paragraph 0032).

In the technology described in Patent Document 4, the temperature of the sodium-sulfur battery during discharge is measured, discharge depth is counted, and the discharge is stopped at the time point when the operating voltage between both the ends of the sodium-sulfur battery during the discharge reaches a corrected voltage obtained by taking correction by the temperature of an internal resistor and correction by the discharge depth into consideration (paragraph 0011).

### Prior Art Documents

### Patent Documents

Patent Document 1: Japanese Patent Application Laid-Open No. 11-54146 (1999)
Patent Document 2: WO 2016/136507
Patent Document 3: WO 2010/109977
Patent Document 4: Japanese Patent Application Laid-Open No. 2000-182662

### Summary

### Problem to be Solved by the Invention

The limit including the upper limit of the temperature of the storage battery, the lower limit of the power storage amount, and the like serves to reduce deterioration, failure, or the like of the storage battery, but prevents the storage battery from fully exhibiting its performance in a time of emergency that occurs with low frequency.

For example, when there is a power failure in an independent system, power is supplied from the storage battery to the control device and the load. Thus, if the power failure continues for a long period of time, discharge of the storage battery continues for a long period of time, and thus it is in some cases necessary to stop the discharge of the storage battery in order to keep to the limit. For example, to prevent the temperature of the storage battery from increasing higher than its upper limit, it is in some cases necessary to stop the discharge of the storage battery without causing the storage battery to fully exhibit its performance. Further, to prevent the power storage amount of the storage battery from decreasing lower than its lower limit, it is in some cases necessary to stop the discharge of the storage battery without causing the storage battery to fully exhibit its performance. When stopping the discharge of the storage battery is inevitable, supply of power to the control device is shut off, which may cause deterioration, failure, or the like of the devices constituting the power supply system.

This problem is caused in a storage battery other than the storage battery included in the independent system as well.

The present invention is made in view of the problem described above. The problem to be solved by the present invention is to reduce deterioration of a storage battery, and besides, cause the storage battery to fully exhibit its performance in a case of emergency.

### Means to Solve the Problem

The present invention is intended for a control apparatus of a storage battery.

The control apparatus of the storage battery includes a control part and a setting part.

The control part controls a power value of charged/discharged power and charge/discharge time of the storage battery so as to be able to keep to a limit including at least one of an upper limit of temperature and a lower limit of a power storage amount of the storage battery.

In normal times, the setting part sets the limit to a first limit having first tolerance. Further, in a time of emergency, the setting part sets the limit to a second limit having second tolerance being smaller than the first tolerance or not having tolerance.

The present invention is also intended for a control method for a storage battery.

### Effects of the Invention

According to the present invention, in normal times, the power value of the charged/discharged power and the charge/discharge time of the storage battery are controlled so as to be able to keep to the first limit having the first tolerance, and deterioration of the storage battery is thus reduced. Further, in the case of emergency, the power value of the charged/discharged power and the charge/discharge time of the storage battery are controlled so as to be able to keep to the second limit having the second tolerance being smaller than the first tolerance or not having tolerance, and the storage battery can thus be caused to fully exhibit its performance. Consequently, deterioration of the storage battery can be reduced, and the storage battery can be caused to fully exhibit its performance in the case of emergency.

These and other objects, features, aspects and advantages of the present invention will become more apparent from the following detailed description of the present invention when taken in conjunction with the accompanying drawings.

### Brief Description of Drawings

FIG. 1 is a block diagram illustrating an independent system according to the first embodiment.
FIG. 2 is a block diagram illustrating an energy management system (EMS) and a control device that controls a storage battery included in the independent system according to the first embodiment.
FIG. 3 is a diagram illustrating an example of the upper limit of temperature of the storage battery set in the independent system according to the first embodiment.
FIG. 4 is a diagram illustrating an example of the lower limit of the power storage amount of the storage battery set in the independent system according to the first embodiment.
FIG. 5 is a block diagram illustrating the EMS and the control device that controls the storage battery included in the independent system according to a modification of the first embodiment.

### Description of Embodiments

### 1 Independent System

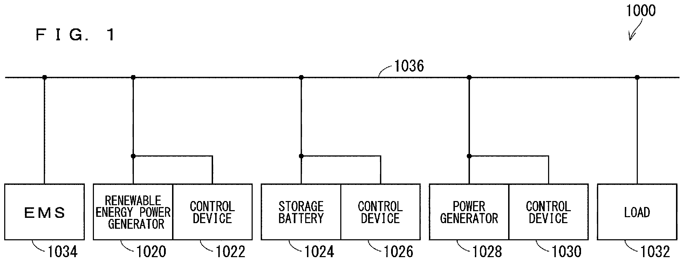

FIG. 1 is a block diagram illustrating an independent system according to the first embodiment.

An independent system 1000 according to the first embodiment illustrated in FIG. 1 includes a renewable energy power generator 1020, a control device 1022 that controls the renewable energy power generator 1020, a storage battery 1024, a control device 1026 that controls the storage battery 1024, a power generator 1028, a control device 1030 that controls the power generator 1028, a load 1032, an energy management system (EMS) 1034, and a power distribution line 1036. The independent system 1000 may include elements different from these elements. The independent system 1000 may include an additional renewable energy power generator, and a control device that controls the additional renewable energy power generator. The independent system 1000 may include an additional storage battery, and a control device that controls the additional storage battery. The independent system 1000 may include an additional power generator, and a control device that controls the additional power generator. The power generator 1028 and the control device 1030 may be omitted. The independent system 1000 may include an additional load.

The renewable energy power generator 1020, the control device 1022, the storage battery 1024, the control device 1026, the power generator 1028, the control device 1030, the load 1032, and the EMS 1034 are electrically connected to the power distribution line 1036. With this configuration, the storage battery 1024 can be charged with power generated by the renewable energy power generator 1020 and the power generator 1028. Further, power generated by the renewable energy power generator 1020 and the power generator 1028 and power discharged from the storage battery 1024 can be supplied to the control device 1022, the control device 1026, the control device 1030, the load 1032, and the EMS 1034.

Examples of the renewable energy power generator 1020 include a solar power generator, a wind power generator, a flow-in type hydroelectric power generator, a geothermal power generator, a solar thermal power generator, a biomass power generator, and the like.

Examples of the storage battery 1024 include a sodium-sulfur battery, a redox flow battery, a lithium ion battery, a lead-acid battery, a nickel-metal hydride battery, and the like.

The power generator 1028 is a power generator that can adjust generated power, unlike the renewable energy power generator 1020. Examples of the power generator 1028 include a diesel power generator, a gas turbine power generator, a water reservoir-type hydroelectric power generator, a pondage-type hydroelectric power generator, and the like.

Each of the control devices 1022 and 1030 includes a communication device, an output adjustment device, or the like. The control device 1026 includes a communication device, a bidirectional converter, a heater, a heat dissipation fan, an air conditioner, or the like.

### 2 Control of Power Value of Charged/Discharged Power, Charge/Discharge Time, and Heat Dissipation Amount of Storage Battery

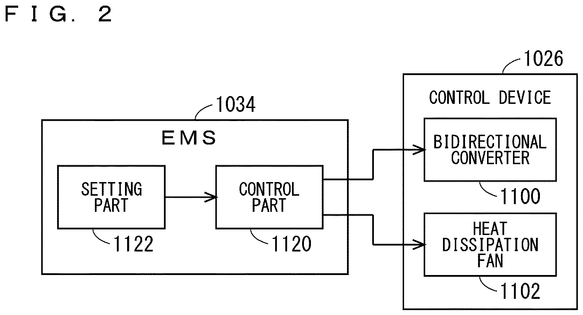

FIG. 2 is a block diagram illustrating the energy management system and the control device that controls the storage battery included in the independent system according to the first embodiment.

The control device 1026 that controls the storage battery 1024 includes a bidirectional converter 1100 and a heat dissipation fan 1102. The bidirectional converter 1100 supplies power discharged from the storage battery 1024 to the power distribution line 1036, and charges the storage battery 1024 with the power supplied from the power distribution line 1036, in accordance with an input command. The power value of the charged/discharged power of the storage battery 1024 varies according to the command input to the bidirectional converter 1100. The heat dissipation fan 1102 generates an airflow for causing the storage battery 1024 to dissipate heat, in accordance with an input command. The heat dissipation amount of the storage battery 1024 varies according to the command input to the heat dissipation fan 1102.

The EMS 1034 serves as a control apparatus of the storage battery 1024, and includes a control part 1120 and a setting part 1122. The control part 1120 and the setting part 1122 are configured by causing a computer to execute programs. All of a part of the control part 1120 and the setting part 1122 may be configured with hardware that does not execute programs. The control part 1120 and the setting part 1122 may be provided in the control device 1026.

The control part 1120 outputs a command to the bidirectional converter 1100. With this configuration, the control part 1120 controls the power value of the charged/discharged power and the charge/discharge time of the storage battery 1024. Further, the control part 1120 outputs a command to the heat dissipation fan 1102. With this configuration, the control part 1120 controls the heat dissipation amount of the storage battery 1024.

The control part 1120 controls the power value of the charged/discharged power and the charge/discharge time of the storage battery 1024 so as to be able to keep to the limit including at least one of the upper limit of temperature and the lower limit of the power storage amount of the storage battery 1024, and desirably, in addition to these, controls the heat dissipation amount of the storage battery 1024. The upper limit of the temperature of the storage battery 1024 is also referred to as a highest allowable temperature upper limit, highest reachable temperature, or the like.

In the case that the storage battery 1024 is such a storage battery that increases its temperature when at least of one of charge and discharge is performed, the limit to be kept to by the control part 1120 includes the upper limit of the temperature of the storage battery 1024. The storage battery that increases its temperature when at least of one of charge and discharge is performed is such a storage battery that generates heat when at least of one of charge and discharge is performed, and has the heat generation amount at the time of heat generation larger than the heat dissipation amount to the surroundings. The sodium-sulfur battery, the lithium ion battery, or the like acts as a storage battery that increases its temperature when at least of one of charge and discharge is performed, as far as the battery is installed in a normal environment, but is not necessarily a storage battery that increases its temperature when at least of one of charge and discharge is performed, in the case that the battery is installed in an extremely cold environment. A storage battery whose charge reaction is exothermic reaction and a storage battery whose charge reaction is endothermic reaction but whose Joule heat is larger than heat absorption generated in the endothermic reaction are a storage battery that generates heat when charge is performed. A storage battery whose discharge reaction is exothermic reaction, and a storage battery whose discharge reaction is endothermic reaction but whose Joule heat is larger than heat absorption generated in the endothermic reaction is a storage battery that generates heat when discharge is performed. While this may vary depending on a condition, in many cases, in the sodium-sulfur battery, heat absorption generated in charge reaction is larger than Joule heat. Thus, in many cases, the sodium-sulfur battery is such a storage battery that increases its temperature when discharge is performed and decreases its temperature when charge is performed.

When the limit to be kept to by the control part 1120 includes the upper limit of the temperature of the storage battery 1024, the control part 1120 controls the power value of the charged/discharged power and the charge/discharge time of the storage battery 1024 so as to be able to keep to the set upper limit of the temperature of the storage battery 1024, and desirably, in addition to these, controls the heat dissipation amount of the storage battery 1024. With this configuration, the temperature of the storage battery 1024 is maintained below the set upper limit of the temperature of the storage battery 1024.

When the limit to be kept to by the control part 1120 includes the lower limit of the power storage amount of the storage battery 1024, the control part 1120 controls the power value of the charged/discharged power and the charge/discharge time of the storage battery 1024 so as to be able to keep to the set lower limit of the power storage amount of the storage battery 1024. With this configuration, the power storage amount of the storage battery 1024 is maintained at or above the set lower limit of the power storage amount of the storage battery 1024.

In normal times, the setting part 1122 sets the limit to be kept to by the control part 1120 to the first limit having first tolerance. Further, in a time of emergency, the setting part 1122 temporarily permits the limit to be kept to by the control part 1120 to be relaxed in comparison to the first limit, and sets the limit to the second limit having second tolerance that is smaller than the first tolerance or having no tolerance. The normal times are, for example, times of non-power failure, and the time of anomaly is, for example, a time of a power failure. In a time of emergency, at least a part of the first tolerance, which is not used in the normal times, is used. The first limit is a limit of regular use that is permitted to be set a number of times. The second limit is a temporary limit that is permitted to be set only a limited number of times.

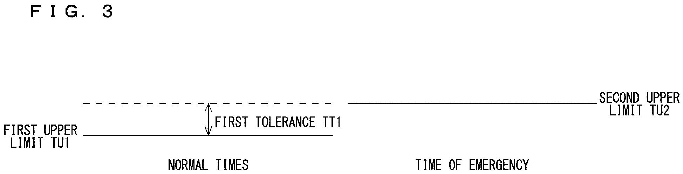

FIG. 3 is a diagram illustrating an example of the upper limit of the temperature of the storage battery set in the independent system according to the first embodiment.

When the limit to be kept to by the control part 1120 includes the upper limit of the temperature of the storage battery 1024, the first limit includes a first upper limit TU1 of the temperature of the storage battery 1024 illustrated in FIG. 3, and the second limit includes a second upper limit TU2 of the temperature of the storage battery 1024 illustrated in FIG. 3 that is higher than the first upper limit TU1 of the temperature of the storage battery 1024. The first upper limit TU1 of the temperature of the storage battery 1024 has first tolerance TT1 of the temperature of the storage battery 1024. The second upper limit TU2 of the temperature of the storage battery 1024 has second tolerance of the temperature of the storage battery 1024 that is smaller than the first tolerance TT1 of the temperature of the storage battery 1024, or does not have tolerance of the temperature of the storage battery 1024. FIG. 3 illustrates a case in which the second upper limit TU2 of the temperature of the storage battery 1024 does not have tolerance of the temperature of the storage battery 1024. In the case that the storage battery 1024 is a sodium-sulfur battery, desirably, the first upper limit TU1 of the temperature of the storage battery 1024 is 340 °C, and the second upper limit TU2 of the temperature of the storage battery 1024 is higher than 340 °C and 370 °C or lower. A sodium-sulfur battery is a storage battery that causes exothermic reaction in a case of discharge. Thus, in the case that the storage battery 1024 is a sodium-sulfur battery, the upper limits TU1 and TU2 of the temperature of the storage battery 1024 are mainly applied to the case of discharge.

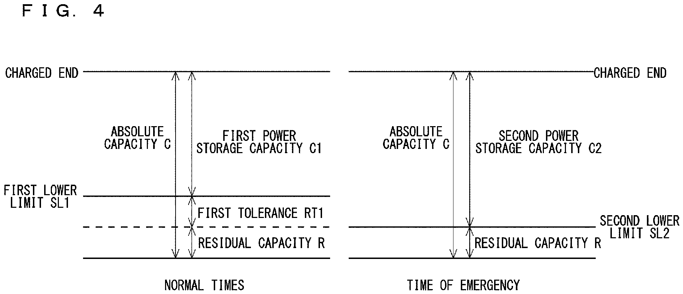

FIG. 4 is a diagram illustrating an example of the lower limit of the power storage amount of the storage battery set in the independent system according to the first embodiment.

When the limit to be kept to by the control part 1120 includes the lower limit of the power storage amount of the storage battery 1024, the first limit includes a first lower limit SL1 of the power storage amount of the storage battery 1024 illustrated in FIG. 4, and the second limit includes a second lower limit SL2 of the power storage amount of the storage battery 1024 illustrated in FIG. 4 that is lower than the first lower limit SL1 of the power storage amount of the storage battery 1024. The first lower limit SL1 of the power storage amount of the storage battery 1024 has first tolerance RT1 of the power storage amount of the storage battery 1024. The second lower limit SL2 of the power storage amount of the storage battery 1024 has second tolerance of the power storage amount of the storage battery 1024 that is smaller than the first tolerance RT1 of the power storage amount of the storage battery 1024, or does not have tolerance of the power storage amount of the storage battery 1024. FIG. 4 illustrates a case in which the second lower limit SL2 of the power storage amount of the storage battery 1024 does not have tolerance of the power storage amount of the storage battery 1024. Desirably, the first lower limit SL1 of the power storage amount of the storage battery 1024 is a power storage amount when first power storage capacity Cl, which is smaller than actually usable power storage capacity C-R of the storage battery 1024, is discharged, and the second lower limit SL2 of the power storage amount of the storage battery 1024 is a power storage amount when second power storage capacity C2, which is equal to the actually usable power storage capacity C-R of the storage battery 1024, is discharged. The first power storage capacity C1 is power storage capacity obtained by subtracting residual capacity R and the first tolerance RT1 of the storage battery 1024 from absolute capacity C of the storage battery 1024, and the second power storage capacity C2 is power storage capacity obtained by subtracting the residual capacity R of the storage battery 1024 from the absolute capacity C of the storage battery 1024. The absolute capacity C mentioned herein is also referred to as product capacity, which is capacity that is determined for the storage battery 1024 and does not change over time. Further, the remaining capacity R is capacity that increases over time and cannot be charged or discharged. In the case that discharge of the storage battery 1024 is stopped at the time point when the voltage of the storage battery 1024 reaches a set voltage and power storage capacity which can be discharged before the voltage of the storage battery 1024 reaches a voltage higher than the set voltage is defined as the first power storage capacity Cl, the second power storage capacity C2 is defined as power storage capacity which can be discharged from storage battery 1024 before the voltage of the storage battery 1024 reaches the set voltage.

Through control by the EMS 1034, the power value of the charged/discharged power, the charge/discharge time, the heat dissipation amount, and the like of the storage battery 1024 are controlled so as to be able to keep to the first limit having the first tolerances TT1 and RT1 and the like in the normal times, thus reducing deterioration of the storage battery 1024. Further, in the time of emergency, the power value of the charged/discharged power, the charge/discharge time, the heat dissipation amount, and the like of the storage battery 1024 are controlled so as to be able to keep to the second limit having the second tolerance smaller than the first tolerances TT1 and RT1 and the like or not having tolerance, thus causing the storage battery 1024 to fully exhibit its performance. With this configuration, deterioration of the storage battery 1024 can be reduced, and the storage battery 1024 can be caused to fully exhibit its performance in the time of emergency. For example, in the time of emergency, the storage battery 1024 can be caused to discharge a great amount of power and the storage battery 1024 can be caused to discharge a great amount of power energy, with the result that the storage battery 1024 can be caused to discharge for a long period of time.

Further, through the control by the EMS 1034, it is more likely that supply of power to the control devices included in a power supply system, such as the control device 1022, the control device 1026, the control device 1030, and the EMS 1034, can be maintained, and the independent system 1000 can thus be stably operated. For example, the number of times of restarting the power supply system can be reduced, and the operating rate of the power supply system can be increased. Further, the number of times of total power failure in the independent system 1000 can be reduced, and failure and deterioration of the devices included in the independent system 1000 can thus be reduced.

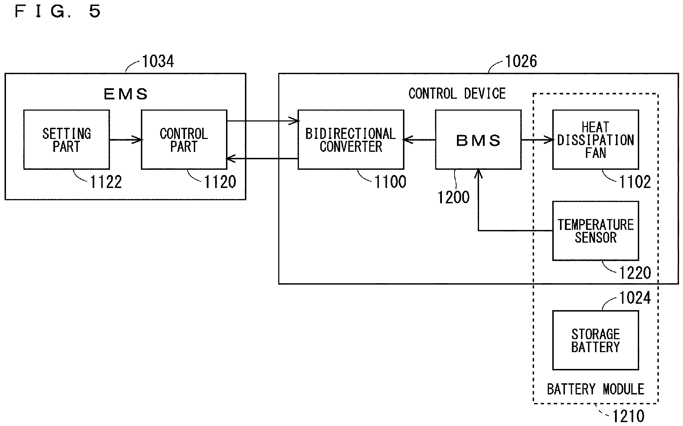

FIG. 5 is a block diagram illustrating the EMS and the control device that controls the storage battery included in the independent system according to a modification of the first embodiment.

In the independent system according to the modification of the first embodiment, as illustrated in FIG. 5, the control device 1026 that controls the storage battery 1024 includes a bidirectional converter 1100, a heat dissipation fan 1102, a battery management system (BMS) 1200, and a temperature sensor 1220. Further, the EMS 1034 includes a control part 1120 and a setting part 1122. Further, the storage battery 1024, the heat dissipation fan 1102, and the temperature sensor 1220 constitute a battery module 1210. In the independent system according to the modification of the first embodiment, the EMS 1034 and the BMS 1200 each serve as a control apparatus of the storage battery 1024.

In the independent system according to the modification of the first embodiment, the control part 1120 included in the EMS 1034 outputs a command to the bidirectional converter 1100, and controls the power value of the charged/discharged power and the charge/discharge time of the storage battery 1024. Further, the BMS 1200 outputs a command to the heat dissipation fan 1102, and controls the heat dissipation amount of the storage battery 1024. The BMS 1200 acquires temperature data indicating temperature of the storage battery 1024 from the temperature sensor 1220, and uses the acquired temperature data for control of the heat dissipation amount of the storage battery 1024. For example, when the BMS 1200 detects an increase of the temperature of the storage battery 1024, the BMS 1200 increases the heat dissipation amount of the storage battery 1024. Further, the BMS 1200 transmits the acquired temperature data to the control part 1120 via the bidirectional converter 1100.

While the invention has been shown and described in detail, the foregoing description is in all aspects illustrative and not restrictive. It is therefore understood that numerous unillustrated modifications can be devised without departing from the scope of the invention.

### Explanation of Reference Signs

- 1000: Independent system

- 1024: Storage battery
- 1034: Energy management system (EMS)
- 1100: Bidirectional converter
- 1102: Heat dissipation fan
- 1120: Control part
- 1122: Setting part
- 1200: Battery management system (BMS)

## Claims

1. A control apparatus of a storage battery, comprising:
a control part configured to control a power value of charged/discharged power and charge/discharge time of the storage battery so as to be able to keep to a limit including at least one of an upper limit of temperature and a lower limit of a power storage amount of the storage battery; and
a setting part configured to set the limit to a first limit having first tolerance in normal times, and set the limit to a second limit having second tolerance being smaller than the first tolerance or not having tolerance in a time of emergency.

2. The control apparatus of the storage battery according to claim 1, wherein
the limit includes the upper limit of the temperature of the storage battery,
the control part controls the power value of the charged/discharged power and the charge/discharge time of the storage battery so as to be able to keep to the upper limit of the temperature of the storage battery,
the first limit includes a first upper limit of the temperature of the storage battery, and
the second limit includes a second upper limit of the temperature of the storage battery being higher than the first upper limit of the temperature of the storage battery.

3. The control apparatus of the storage battery according to claim 2, wherein
the control part further controls a heat dissipation amount of the storage battery so as to be able to keep to the upper limit of the temperature of the storage battery.

4. The control apparatus of the storage battery according to claim 2 or 3,
wherein
the storage battery is a sodium-sulfur battery,
the first upper limit of the temperature of the storage battery is 340 °C, and
the second upper limit of the temperature of the storage battery is higher than 340 °C and 370 °C or lower.

5. The control apparatus of the storage battery according to any one of claims 1 to 4, wherein
the limit includes the lower limit of the power storage amount of the storage battery,
the control part controls the power value of the charged/discharged power and the charge/discharge time of the storage battery so as to be able to keep to the lower limit of the power storage amount of the storage battery,
the first limit includes a first lower limit of the power storage amount of the storage battery, and
the second limit includes a second lower limit of the power storage amount of the storage battery being lower than the first lower limit of the power storage amount of the storage battery.

6. The control apparatus of the storage battery according to claim 5, wherein
the first lower limit of the power storage amount of the storage battery is the power storage amount when first power storage capacity being smaller than actually usable power storage capacity of the storage battery is discharged, and
the second lower limit of the power storage amount of the storage battery is the power storage amount when second power storage capacity being equal to the actually usable power storage capacity of the storage battery is discharged.

7. The control apparatus of the storage battery according to claim 5 or 6, wherein
the first power storage capacity is power storage capacity obtained by subtracting residual capacity and tolerance of the storage battery from absolute capacity of the storage battery, and
the second power storage capacity is power storage capacity obtained by subtracting the residual capacity of the storage battery from the absolute capacity of the storage battery.

8. The control apparatus of the storage battery according to any one of claims 5 to 7, wherein
the first power storage capacity is the power storage capacity which can be discharged from the storage battery before a voltage of the storage battery reaches a voltage higher than a set voltage, and
the second power storage capacity is the power storage capacity which can be discharged from the storage battery before the voltage of the storage battery reaches the set voltage.

9. The control apparatus of the storage battery according to any one of claims 1 to 8, wherein
the normal times are times of other than a power failure, and
the times of emergency is a time of a power failure.

10. A control method for a storage battery, comprising the steps of:
controlling a power value of charged/discharged power and charge/discharge time of the storage battery so as to be able to keep to a limit including at least one of an upper limit of temperature and a lower limit of a power storage amount of the storage battery; and
setting the limit to a first limit having first tolerance in normal times, and setting the limit to a second limit having second tolerance being smaller than the first tolerance or not having tolerance in a time of emergency.
